# EUROPÄISCHE PATENTSCHRIFT

(11) **EP 2 498 716 B1**
(45) Veröffentlichungstag und Bekanntmachung des Hinweises auf die Patenterteilung: **29.06.2016**
(21) Anmeldenummer: 10778628.7
(22) Anmeldetag: 09.11.2010
(51) Int. Cl.: A61C 7/14, A61C 7/16

(54) **VERFAHREN ZUR HERSTELLUNG EINES KIEFERORTHOPÄDISCHEN ELEMENTS**
METHOD FOR PRODUCING AN ORTHOPEDIC JAW ELEMENT
PROCÉDÉ DE RÉALISATION D'UN ÉLÉMENT D'ORTHOPÉDIE DE LA MÂCHOIRE

(30) Priorität: 12.11.2009 DE 102009054096
(43) Veröffentlichungstag der Anmeldung: 19.09.2012
(73) Patentinhaber: Dentaurum GmbH & Co. Kg, 75228 Ispringen (DE)
(72) Erfinder: REISE, Michael, 75015 Bretten (DE); OCHS, Werner, 75334 Straubenhardt (DE); REGELMANN, Michael, 75245 Neulingen (DE); EHRENBERGER, Walter, 75236 Kämpfelbach (DE)
(74) Vertreter: Hoeger, Stellrecht & Partner Patentanwälte mbB
(86) Internationale Anmeldenummer: PCT/EP2010/067144
(87) Internationale Veröffentlichungsnummer: WO 2011/058020

(56) Entgegenhaltungen:
- EP-A1- 1 884 216
- EP-B1- 0 841 877
- DE-A1-102005 045 698
- US-A- 5 944 517
- US-A1- 2006 166 159

## Beschreibung

Die Erfindung betrifft ein Verfahren zur Herstellung eines kieferorthopädischen Elements mit einem keramischen Grundkörper, der eine Basisfläche zur Fixierung des Elements an einem Zahn aufweist.

Kieferorthopädische Elemente können beispielsweise im Rahmen einer kieferorthopädischen Behandlung zur Korrektur der Fehlstellung eines Zahns zum Einsatz kommen und zum Beispiel in Form eines Brackets oder eines Bukkal- oder Lingualröhrchens ausgestaltet sein. Um die Fehlstellung des Zahns zu korrigieren, wird das kieferorthopädische Element am Zahn befestigt. Der Grundkörper kann eine Aufnahme, beispielsweise einen Schlitz oder eine zylinderförmige Öffnung, aufweisen, wobei in die Aufnahme ein elastischer Bogendraht eingebracht wird. Über den Bogendraht können dann Richtkräfte auf den Zahn ausgeübt werden, so dass sich dessen Stellung am Kiefer verändert. Zur Fixierung des kieferorthopädischen Elements am Zahn kommt ein Kleber zum Einsatz, mit dessen Hilfe das Element am Zahnschmelz temporär befestigt werden kann. Hierbei soll einerseits eine ausreichend stabile Befestigung erzielt werden, damit die gewünschten Richtkräfte auf den Zahn ausgeübt werden können. Andererseits muss sichergestellt sein, dass nach Ende der Behandlung das kieferorthopädische Element vom Zahn abgelöst werden kann, wobei der Zahnschmelz nach Möglichkeit keine Beschädigung erfahren soll.

Der Verbund zwischen dem kieferorthopädischen Element und dem Kleber und zwischen dem Kleber und dem Zahn kann durch eine chemische Verbindung und/oder durch Adhäsion erfolgen und kann auch durch eine mechanische Verzahnung erzielt werden. Bei kieferorthopädischen Elementen mit einem metallischen Grundkörper hat es sich als vorteilhaft erwiesen, die Basisfläche mit einer Retentionsstruktur zu versehen, die eine Vielzahl von Vertiefungen und/oder Erhebungen aufweist. Dies ermöglicht es, die Oberflächen der miteinander zu verklebenden Teile zu vergrößern und dadurch den Klebeverbund zu verbessern. Die Retentionsstruktur kann beispielsweise netzförmig ausgestaltet sein, wie dies in der DE 35 19 213 A1 beschrieben ist.

Bei metallischen Grundkörpern und allgemein bei Grundkörpern aus einem aufschmelzbaren Werkstoff ist es aus der EP 0 841 877 B1 bekannt, die Basisfläche mittels eines Laserstrahls aufzuschmelzen, um eine Vielzahl von Vertiefungen und unregelmäßigen Erhebungen zu erzeugen, die Hinterschneidungen ausbilden und dadurch eine Verzahnung des Klebers mit dem kieferorthopädischen Element ermöglichen. Derartige Grundkörper sind elastisch und/oder plastisch verformbar.

Keramische Grundkörper, insbesondere gesinterte keramische Grundkörper weisen praktisch keine elastische oder plastische Verformbarkeit auf. Sie weisen vielmehr eine hohe Sprödigkeit auf und auch eine sehr hohe Schmelztemperatur. Sie können deshalb mittels eines Laserstrahls nicht oberflächlich aufgeschmolzen werden. Beim Aufschmelzen besteht nämlich die Gefahr der Zerstörung des Grundkörpers. Um dennoch den Verbund zwischen einem keramischen Grundkörper und dem Zahnschmelz zu verbessern, wird in der US 5,197,873 vorgeschlagen, auf die Basisfläche des Grundkörpers eine Vielzahl sehr kleiner Partikel aufzusintern. Dadurch wird die mit dem Kleber zusammenwirkende Fläche des Grundkörpers vergrößert und es werden darüber hinaus Hinterschneidungen bereitgestellt, die den mechanischen Verbund zwischen Kleber und Grundkörper verstärken. In der US 5,110,290 wird vorgeschlagen, auf den keramischen Grundkörper ein Kunststoffnetz aufzubringen. Dies ermöglicht ebenfalls eine Oberflächenvergrößerung und dadurch eine stärkere Verbindungskraft zwischen dem Kleber und dem Grundkörper. Das Aufsintern kleiner Partikel ist jedoch ebenso wie das Aufbringen eines Kunststoffnetzes mit dem Nachteil behaftet, dass die an sich sehr gute Biokompatibilität des keramischen Grundkörpermaterials beeinträchtigt wird.

Es wurde auch vorgeschlagen, den Verbund zwischen dem Kleber und einem aus Aluminiumoxid gefertigten Grundkörper durch Aufbringen einer Silanschicht zu verbessern. Die Silanschicht bewirkt eine starke chemische Verbindung zwischen dem Kleber und dem Grundkörper. Allerdings besteht die Gefahr, dass am Ende der kieferorthopädischen Behandlung beim Ablösen des kieferorthopädischen Elements vom Zahn der Zahnschmelz beschädigt wird. Darüber hinaus hat die Silanschicht nur eine begrenzte Haltbarkeit und die Haftfestigkeitswerte zeigen eine hohe Streuung. Außerdem ist das Aufbringen einer Silanschicht mit beträchtlichen Kosten verbunden.

Ein Verfahren zur Herstellung einer kieferorthopädischen Elements gemäss dem Oberbegriff des Anspruchs 1 ist aus der EP 1884216 A1 bekannt, worauf die zweiteilige Form des Anspruchs 1 basiert. Vorteilhafte Ausführungsformen der Erfindung gehen aus den abhängigen Patentansprüchen hervor.

Aufgabe der vorliegenden Erfindung ist es, ein Verfahren der gattungsgemäßen Art zur Herstellung eines kieferorthopädischen Elements bereitzustellen, wobei der Grundkörper des hergestellten Elements einerseits mit einer hohen Haftkraft am Zahn befestigt werden kann und wobei er andererseits am Ende einer kieferorthopädischen Behandlung auf einfache Weise vom Zahn getrennt werden kann.

Diese Aufgabe wird bei einem Verfahren der eingangs genannten Art erfindungsgemäß dadurch gelöst, dass man einen Laserstrahl in einem Beaufschlagungsbereich an der Basisfläche entlangführt, die Basisfläche im Beaufschlagungsbereich lokal mittels des Laserstrahls oberflächlich erwärmt und durch Rissbildung mikroskopische Partikel aus der Basisfläche herausbrechen.

In die Erfindung fließt der Gedanke mit ein, dass die Wechselwirkung zwischen der Basisfläche des Grundkörpers und dem Kleber beträchtlich gesteigert und dadurch die Haftkraft verbessert werden kann, wenn die Basisfläche eine aufgeraute Struktur aufweist mit einer Vielzahl von Bruchflächen, die schräg zueinander ausgerichtet sind. Die mikroskopischen Bruchflächen bewirken eine starke Oberflächenvergrößerung, wobei sie in sehr unterschiedlichen Richtungen ausgerichtet sind. Die Bruchflächen werden erzeugt, indem man die Basisfläche in einem Beaufschlagungsbereich lokal mit einem Laserstrahl beaufschlagt, wobei man die Basisfläche oberflächlich erwärmt. Dadurch werden im spröden Material des Grundkörpers in einem oberflächennahen Bereich Risse induziert, ohne dass die Basisfläche aufgeschmolzen wird. Es werden vielmehr in einem oberflächennahen Bereich des Grundkörpers thermische Spannungen erzeugt, so dass es zu Brüchen kommt und mikroskopische Partikel subtraktiv entfernt werden. Es bilden sich dadurch eine Vielzahl von schräg zueinander ausgerichteten mikroskopischen Bruchflächen aus, die eine erhebliche Vergrößerung der Oberfläche des Grundkörpers zur Folge haben und zu einer verbesserten Haftfestigkeit des Grundkörpers am zu behandelnden Zahn führen. Der oberflächennahe Bereich kann sich über eine Tiefe von weniger als 0,2 mm erstrecken, vorzugsweise über eine Tiefe von weniger als 0,1 mm.

Es hat sich gezeigt, dass durch die lokale oberflächliche Erwärmung der Basisfläche mittels des Laserstrahls auf einfache Weise schräg zueinander ausgerichtete mikroskopische Bruchflächen bereitgestellt werden können, die eine hohe Haftkraft zwischen dem kieferorthopädischen Element und dem Zahn ermöglichen, wobei das kieferorthopädische Element am Ende einer kieferorthopädischen Behandlung ohne große Schwierigkeiten vom Zahn gelöst werden kann. Die Gefahr einer Beschädigung des Zahnschmelzes beim Ablösen des kieferorthopädischen Elements ist gering.

Vorzugsweise weisen die durch oberflächliche Rissbildung mittels des Laserstrahls erzeugte Bruchflächen eine maximale Erstreckung von weniger als 50 µm auf, insbesondere weniger als 20 µm. Die Basisfläche des keramischen Grundkörpers weist somit eine große Anzahl schräg zueinander ausgerichteter, verhältnismäßig kleiner Bruchflächen auf. Je kleiner die jeweils in unterschiedlichem Winkel zueinander geneigten Bruchflächen sind, desto größer ist die gesamte Oberfläche, die für eine Wechselwirkung zwischen dem keramischen Grundkörper und dem Kleber zur Verfügung steht.

Die durch die oberflächliche Erwärmung mittels des Laserstrahls erzeugten Bruchflächen sind bevorzugt zumindest teilweise eben ausgestaltet.

Durch das Entlangführen des Laserstrahls an der Basisfläche werden Bereiche der Basisfläche auf eine Temperatur unterhalb der Schmelztemperatur erwärmt. Dadurch werden thermische Spannungen induziert, die zu einer Rissbildung führen, so dass mikroskopische Partikel aus der Basisfläche herausbrechen. Die Basisfläche zeigt somit eine Vielzahl von schräg zueinander ausgerichteten Bruchflächen und weist dadurch eine große Oberfläche auf, so dass eine beträchtliche Haftfestigkeit erzielt werden kann. Die Bruchflächen können hierbei auch Hinterschneidungen ausbilden, die eine Verzahnung des Klebers mit der Basisfläche ermöglichen.

Durch das laserinduzierte Herausbrechen mikroskopischer Partikel und die dadurch gebildete Ausbildung von Bruchflächen in der Basisfläche können für den Verbund aus dem Grundkörper und dem Kleber Haftfestigkeitswerte erzielt werden, die eine beträchtlich geringere Streuung aufweisen als dies bei silanisierten Basisflächen der Fall ist. Unzulässig hohe Haftfestigkeitswerte können vermieden werden, und dies wiederum reduziert das Risiko, dass beim Ablösen des kieferorthopädischen Elements vom Zahn am Ende einer kieferorthopädischen Behandlung der Zahnschmelz beschädigt wird.

Der Beaufschlagungsbereich, in dem der Laserstrahl an der Basisfläche entlanggeführt wird, um diese lokal oberflächlich zu erwärmen, so dass durch Rissbildung eine Vielzahl von schräg zueinander ausgerichteter mikroskopischer Bruchflächen erzeugt werden, kann sich über die gesamte Basisfläche erstrecken. Es kann allerdings auch vorgesehen sein, dass der Beaufschlagungsbereich sich nur über einen Teilbereich der Basisfläche erstreckt. In diesem Teilbereich bildet sich durch die Laserbeaufschlagung eine aufgeraute Struktur aus, wohingegen die Basisfläche außerhalb des Beaufschlagungsbereichs ohne Aufrauung verbleibt.

Die Ausdehnung des Beaufschlagungsbereiches nur über einen Teilbereich der Basisfläche gibt die Möglichkeit, die Basisfläche außerhalb des Beaufschlagungsbereichs mit einer Markierung zur Zuordnung des kieferorthopädischen Elements zu einem Zahntyp zu versehen. Die Markierung erleichtert dem Kieferorthopäden die Zuordnung des kieferorthopädischen Elements zu einem bestimmten Zahntyp. Als Markierung kann beispielsweise eine Zahnbezeichnung in Form einer ziffernmäßigen Abkürzung gemäß dem FDI-System, das heißt gemäß dem Identifizierungssystem der Fédération Dentaire Internationale, zum Einsatz kommen. Außerhalb der durch die Laserbeaufschlagung erzeugten aufgerauten Struktur ist die Markierung besser erkennbar.

Es kann beispielsweise vorgesehen sein, dass der Rand des Beaufschlagungsbereiches die Markierung definiert. Bei einer derartigen Ausgestaltung stellt der Beaufschlagungsbereich praktisch das Negativ der Markierung dar, das heißt der Bereich der Basisfläche außerhalb des Beaufschlagungsbereiches bildet bereits die Markierung, ohne dass zusätzliche Bearbeitungsschritte erforderlich sind.

Alternativ kann vorgesehen sein, dass die Markierung den Bereich der Basisfläche außerhalb des Beaufschlagungsbereichs nur teilweise überdeckt. Bei einer derartigen Ausgestaltung wird im Bereich der Basisfläche außerhalb des Beaufschlagungsbereichs die Markierung angeordnet.

Es kann vorgesehen sein, dass man die Markierung durch physikalische, chemische oder mechanische additive und/oder subtraktive Bearbeitung der Basisfläche außerhalb der aufgerauten Struktur erzeugt.

Von besonderem Vorteil ist es, wenn man die Markierung mittels eines Laserstrahls erzeugt. Hierzu ist es von Vorteil, wenn der Laserstrahl kontinuierlich zumindest über einen Abschnitt der Basisfläche außerhalb des Beaufschlagungsbereiches, in dem sich die aufgeraute Struktur befindet, bewegt wird. Der zur Erzeugung der Markierung vorteilhafterweise zum Einsatz kommende Laserstrahl hat bevorzugt eine geringere Energiedichte als der zur Erzeugung der mikroskopischen Bruchflächen innerhalb des Beaufschlagungsbereiches zum Einsatz kommende Laserstrahl.

Vorzugsweise führt man im Beaufschlagungsbereich den Laserstrahl schrittweise an der Basisfläche entlang. Die Bestrahlung der Basisfläche im Beaufschlagungsbereich erfolgt in diesem Fall in aufeinander folgenden Schritten, wobei jeweils eine Einwirkzone der Basisfläche mit Laserstrahlung beaufschlagt wird. Die einzelnen Einwirkzonen können sich überlappen. In den Einwirkzonen absorbiert der Grundkörper Laserstrahlung. Dies führt zu lokal begrenzten Bereichen mit thermischen Spannungen, die im spröden Material des Grundkörpers zu Rissen führen und zum Herausbrechen mikroskopischer Partikel.

Von Vorteil ist es, wenn man mittels des Laserstrahls die Basisfläche im Beaufschlagungsbereich punktuell erwärmt. Die einzelnen Einwirkzonen, in denen der Grundkörper Laserstrahlung absorbiert, haben in diesem Fall nur eine sehr geringe Ausdehnung, beispielsweise eine Ausdehnung von weniger als 1 mm, insbesondere weniger als 0,5 mm, vorzugsweise maximal 0,1 mm. Durch die sehr geringe, praktisch punktförmige Ausdehnung der Einwirkzonen lässt sich eine Tiefenschädigung des Grundkörpers aufgrund der Laserstrahlung auf einfache Weise vermeiden.

Bei einer bevorzugten Ausführungsform führt man im Beaufschlagungsbereich einen fokussierten Laserstrahl punkt- oder linienförmig an der Basisfläche entlang. Dadurch kann an der Basisfläche eine aufgeraute Struktur erzielt werden, die punkt- oder linienförmig ist und sich nur über einen Teilbereich der Basisfläche erstreckt. Die Basisfläche weist somit aufgeraute und nicht aufgeraute Bereiche auf. Das Verhältnis zwischen aufgerauten und nicht aufgerauten Flächenbereichen beeinflusst die erzielbare Haftkraft und gibt dadurch die Möglichkeit, die gewünschte Haftkraft zu steuern, so dass einerseits während einer kieferorthopädischen Behandlung zuverlässig und reproduzierbar Richtkräfte auf den Zahn ausgeübt werden können, und dass andererseits nach Ende der Behandlung das kieferorthopädische Element vom Zahn abgelöst werden kann, ohne dass ein großes Risiko für eine Beschädigung des Zahnschmelzes besteht.

Das kieferorthopädische Element kann beispielsweise ein Bracket oder auch ein Bukkal- oder Lingualröhrchen ausbilden.

Besonders günstig ist es, wenn man den Laserstrahl im Beaufschlagungsbereich mehrfach mit einander vollständig oder teilweise überdeckenden Einwirkzonen punkt- oder linienförmig an der Basisfläche entlangführt. Je nachdem, wie oft der Laserstrahl auf eine bereits mit dem Laser beaufschlagte Einwirkzone gerichtet wird, können die Tiefe und die laterale Weite der aufgerauten Struktur beeinflusst werden. Durch das mehrfache Überstreichen des Laserstrahls über dieselbe Einwirkzone der Basisfläche kann eine Tiefenstruktur erzielt werden, das heißt es können in Bereichen, aus denen bereits mikroskopische Partikel herausgebrochen wurden, weitere Partikel herausgebrochen werden, ohne dass dadurch der Grundkörper eine Tiefenschädigung erfährt. Vielmehr wird die Basisfläche im Beaufschlagungsbereich mittels der Laserstrahlung nur punktuell und oberflächlich auf eine Temperatur unterhalb der Schmelztemperatur des Grundkörpers erwärmt, so dass sich nur oberflächlich mikroskopische Partikel aus der Basisfläche herauslösen.

Der Fokusdurchmesser des im Beaufschlagungsbereich zum Einsatz kommenden Laserstrahls beträgt bei einer vorteilhaften Ausführungsform des erfindungsgemäßen Verfahrens maximal 0,5 mm, insbesondere maximal 0,1 mm. Beispielsweise kann der Fokusdurchmesser 0,02 mm bis 0,09 mm betragen.

Günstig ist es, wenn der im Beaufschlagungsbereich zum Einsatz kommende Laserstrahl eine Energie von maximal 20 W aufweist. Insbesondere eine Energie im Bereich von 5 W bis 15 W hat sich als vorteilhaft erwiesen. Es kann beispielsweise vorgesehen sein, dass der Laserstrahl eine Energie von 10 W aufweist. Ist der Laserstrahl zu energiereich, so kann dies zu einer Tiefenschädigung des Grundkörpers führen. Um eine derartige Tiefenschädigung zu vermeiden, wird die Energie des Laserstrahls vorteilhafterweise begrenzt. Um dennoch eine Tiefenstruktur zu erzielen, kann der Laserstrahl, wie bereits erwähnt, mehrfach mit einander vollständig oder teilweise überdeckenden Einwirkzonen an der Basisfläche entlanggeführt werden.

Die Einwirkzeit des Laserstrahls auf eine Einwirkzone beträgt bei einer vorteilhaften Ausführungsform des Verfahrens maximal 0,5 s, insbesondere maximal 0,1 s. Die Einwirkzeit des Laserstrahls beeinflusst die Tiefe der Einwirkzone. Um eine Tiefenschädigung des Grundkörpers zu vermeiden, wird die Einwirkzeit vorteilhafterweise begrenzt.

Der Laserstrahl ist bei einer vorteilhaften Ausführungsform gepulst.

Die Pulsbreite des Laserstrahls beträgt günstigerweise maximal 0,1 µs, insbesondere maximal 50 ns.

Vorzugsweise verwendet man zur Bestrahlung der Basisfläche im Beaufschlagungsbereich einen Festkörperlaser, insbesondere einen Neodym-Ytterbium-Vanadat-Laser oder einen Neodym-YAG-Laser.

Die Wellenlänge der im Beaufschlagungsbereich zum Einsatz kommenden Laserstrahlung liegt bei einer vorteilhaften Ausführungsform des erfindungsgemäßen Verfahrens im Bereich von 800 nm bis 1400 nm, insbesondere im Bereich von 1000 nm bis 1200 nm. Zum Einsatz kommt also vorzugsweise kurzwellige Infrarotstrahlung. Diese wird vom Keramikmaterial des Grundkörpers absorbiert, so dass es zu Erwärmungszonen kommt, in denen sich durch die induzierte Rissbildung mikroskopische Partikel ablösen.

Bei einer vorteilhaften Ausführungsform des erfindungsgemäßen Verfahrens wird der Grundkörper nach der Laserbeaufschlagung des Beaufschlagungsbereichs erwärmt. Das nachträgliche Erwärmen ermöglicht es, verbleibende mechanische Spannungen abzubauen. Die nachträgliche thermische Behandlung des Grundkörpers führt somit zu einer Ausheilung induzierter Spannungen.

Es kann vorgesehen sein, dass der Grundkörper ein aus einem keramischen Pulvermaterial gepresster Grünling oder durch keramischen Spritzguss hergestellter gespritzter Grünling oder ein auf die beschriebenen Weisen hergestellter vorgesinterter Weißling ist, dessen Basisfläche man in einem Beaufschlagungsbereich mit dem Laserstrahl beaufschlagt, und dass man den Grünling oder Weißling anschließend sintert oder heißisostatisch verpresst. Die Erzielung einer aufgerauten Struktur mit einer Vielzahl von Bruchflächen an der Basisfläche des Grundkörpers kann somit während der Herstellung des kieferorthopädischen Elements dann erfolgen, wenn der Grundkörper in Form eines Grünlings oder vorgesinterten Weißlings vorliegt. Erst nach der Laserbestrahlung wird dann der Grundkörper gesintert oder heißisostatisch verpresst. Derartige Pressverfahren zur Herstellung dentaler Teile sind dem Fachmann aus der DE 10 2005 045 698 A1 bekannt.

Alternativ kann vorgesehen sein, dass der Grundkörper bei der Laserbestrahlung des Beaufschlagungsbereichs als ein aus einem keramischen Pulvermaterial dichtgesinterter Formkörper vorliegt. Die Basisfläche des Grundkörpers wird bei einer derartigen Ausgestaltung des erfindungsgemäßen Herstellungsverfahrens erst dann im Beaufschlagungsbereich mit dem Laserstrahl beaufschlagt, wenn der Grundkörper bereits gesintert wurde Die Basisfläche des dichtgesinterten Grundkörpers erfährt dann durch die Laserbestrahlung einer beträchtliche Oberflächenvergrößerung, die zu einer verbesserten Haftfestigkeit führt, wie dies voranstehend erläutert wurde.

Bevorzugt wird der Grundkörper aus einer Oxidkeramik gefertigt, insbesondere aus Aluminiumoxid oder Zirkoniumoxid.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung eines kieferorthopädischen Elements in Form eines Brackets;
- Figur 2:: einen vergrößerten Oberflächenbereich der Basisfläche des Brackets aus Figur 1 mit einer aufgerauten Struktur;
- Figur 3:: einen Ausschnitt der aufgerauten Struktur aus Figur 2 in stärkerer Vergrößerung;
- Figur 4:: einen vergrößerten Ausschnitt aus Figur 3.

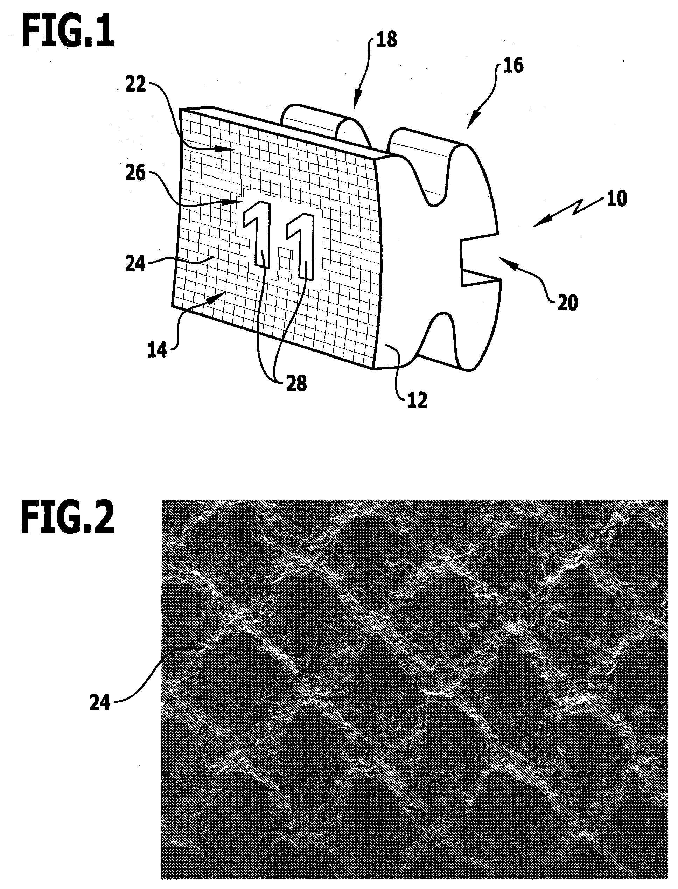

In Figur 1 ist schematisch ein kieferorthopädisches Element in Form eines Brackets 10 dargestellt, das in üblicher Weise einen Grundkörper 12 aufweist, der auf seiner Rückseite eine Basisfläche 14 ausbildet und auf seiner Vorderseite ein erstes Flügelpaar 16 und ein in der Zeichnung nur unvollständig dargestelltes zweites Flügelpaar 18 trägt. Die beiden Flügelpaare 16, 18 weisen jeweils einen okklusalseitigen Flügel und einen gingivalseitigen Flügel auf und sind im Abstand zueinander angeordnet. Die Flügel begrenzen einen Schlitz 20, der in mesial-distaler Richtung verläuft und sich von der mesialen Seite bis zur distalen Seite des Brackets 10 erstreckt. Der Schlitz 20 dient in üblicher Weise der Aufnahme eines an sich bekannten und deshalb in der Zeichnung nicht dargestellten Bogendrahtes.

Die Basisfläche 14 umfasst einen Beaufschlagungsbereich 22 mit einer netzartigen aufgerauten Struktur 24 sowie einen Restbereich 26, der vom Beaufschlagungsbereich 22 umgeben ist und in dem eine Markierung 28 angeordnet ist in Form einer ziffernmäßigen Abkürzung des Zahntyps, dem das Bracket 10 zugeordnet ist. In der dargestellten Ausführungsform trägt das Bracket 10 im Restbereich 26 der Basisfläche 12 als Markierung die Ziffernfolge "11". Die Markierung 28 unterscheidet sich optisch vom übrigen Bereich des Restbereichs 26 und auch vom Beaufschlagungsbereich 22, die Markierung 28 ist nämlich heller als der Rest der Basisfläche 14.

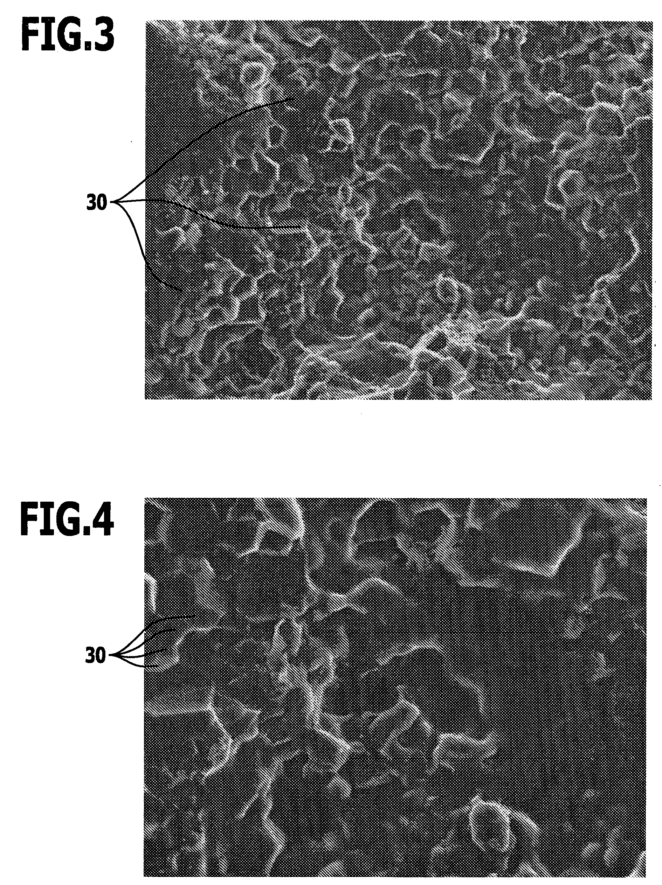

Mit seiner Basisfläche 14 kann das Bracket 10 mit einem Zahn verklebt werden. Um einen möglichst stabilen Klebeverbund zwischen dem Bracket 10 und dem Zahn zu erzielen, weist die Basisfläche 14 die aufgeraute Struktur 22 auf, die im dargestellten Ausführungsbeispiel netzartig ausgestaltet ist. Wie insbesondere aus den Vergrößerungen der aufgerauten Struktur in den Figuren 3 und 4 deutlich wird, umfasst die aufgeraute Struktur eine Vielzahl von schräg zueinander ausgerichteten, ebenen Bruchflächen 30, die zu einer beträchtlichen Vergrößerung der Oberfläche der Basisfläche 14 führen und dadurch die Haftfestigkeit des Brackets 10 am Zahn verbessern.

Die maximale Erstreckung der Bruchflächen 30 ist geringer als 50 µm. Beim dargestellten Bracket 10 beträgt die maximale Erstreckung der Bruchflächen 30 weniger als 20 µm.

Im dargestellten Ausführungsbeispiel ist das gesamte Bracket 10 einschließlich des Grundkörpers 12 aus einer Oxidkeramik gefertigt, beispielsweise aus Aluminiumoxid. Zur Herstellung des Brackets 10 wird die Oxidkeramik in Form eines Pulvermaterials bereitgestellt, das dann zu einem Grünling gepresst oder gespritzt wird. Es kann vorgesehen sein, dass der Grünling zu einem Weißling vorgesintert wird. Anschließend wird im Beaufschlagungsbereich 22 an der Basisfläche 14 des Grünlings oder Weißlings ein fokussierter Laserstrahl, insbesondere der Strahl eines Festkörperlasers, vorzugsweise eines Neodym-Ytterbium-Vanadat-Lasers, schrittweise entlanggeführt, wobei die Basisfläche 14 im Beaufschlagungsbereich 22 mittels des Laserstrahls oberflächlich punktuell erwärmt wird auf eine Temperatur unterhalb der Schmelztemperatur der Oxidkeramik. Aufgrund der lokalen Erwärmung werden thermische Spannungen induziert, die zu einer Rissbildung führen, so dass mikroskopische Partikel aus der Basisfläche 14 herausgebrochen werden. Der Laserstrahl ist gepulst und weist eine Wellenlänge im kurzwelligen Infrarotbereich auf. Insbesondere kann der Laserstrahl eine Wellenlänge von 1064 nm aufweisen. Die Pulsbreite des gepulsten Laserstrahls beträgt weniger als 40 ns, und die Energie des Laserstrahls beträgt maximal 10 W. Der Fokusdurchmesser des Laserstrahls ist kleiner als 0,1 mm, er liegt vorzugsweise im Bereich von 40 bis 80 µm. Nach dem Herausbrechen der mikroskopischen Partikeln zeigt die Basisfläche 14 im Beaufschlagungsbereich 22 die Bruchflächen 30, die schräg zueinander ausgerichtet sind und die Basisfläche 14 aufrauen.

Der Laserstrahl wird im Beaufschlagungsbereich 22 zur Erzielung der aufgerauten Struktur 22 mehrfach mit einander vollständig oder teilweise überdeckenden Einwirkzonen punkt- oder linienförmig an der Basisfläche 14 entlanggeführt. Es kann beispielsweise vorgesehen sein, dass der Laserstrahl 5-mal oder 10-mal über dieselben Einwirkzonen geführt wird. Dies hat zur Folge, dass aus Oberflächenbereichen, aus denen bereits mikroskopische Partikel herausgebrochen wurden, erneut mikroskopische Partikel herausgebrochen werden. Dadurch werden auch Hinterschneidungen gebildet. Das Ausmaß der Oberflächenvergrößerung und die Anzahl der Hinterschneidungen werden durch die Leistung des Laserstrahls, durch die jeweilige Einwirkzeit und durch die Anzahl der Laserbeaufschlagungen bestimmt. Auch die Tiefe der aufgerauten Struktur 22 und deren laterale Weite kann insbesondere durch die Anzahl der Laserbeaufschlagungen auf einfache Weise gesteuert werden.

Durch das Herausbrechen mikroskopischer Partikel aus der Basisfläche 14 mittels der im Beaufschlagungsbereich 22 schrittweise an der Basisfläche 14 entlanggeführten Laserstrahlung kann ein sehr guter Haftverbund zwischen dem Bracket 10 und einem Kleber erzielt werden, der zur Festlegung des Brackets 10 am Zahn zum Einsatz kommt. Die Streuung der Haftfestigkeitswerte ist im Vergleich zu der üblichen Silanisierung der Basisfläche 14 signifikant verringert. Das Risiko, dass am Ende einer kieferorthopädischen Behandlung beim Ablösen des Brackets 10 vom Zahn ein vorgeschädigter Zahnschmelz zerstört wird, ist geringer als bei silanisierten Basisflächen.

Wie bereits erläutert, erstreckt sich der Beaufschlagungsbereich 22 bei der dargestellten Ausführungsform nur über einen Teilbereich der Basisfläche 14. Die Basisfläche 14 kann jedoch auch im Restbereich 26 mit einem Laserstrahl bearbeitet werden, um die Markierung 28 zu erzeugen. Insbesondere kann vorgesehen sein, dass man den zur Erzeugung der aufgerauten Struktur 22 zum Einsatz kommenden Laserstrahl auch zur Erzeugung der Markierung 28 verwendet. Allerdings wird der Laserstrahl zur Erzeugung der Markierung 28 defokussiert, so dass er eine geringere Energiedichte aufweist als bei der Erzeugung der aufgerauten Struktur 22. Außerdem wird der Laserstrahl zur Erzeugung der Markierung 30 kontinuierlich über die Basisfläche 14 bewegt.

Nach erfolgter Laserbeaufschlagung der Basisfläche 14 kann der als Grünling oder Weißling vorliegende Grundkörper 14 gesintert oder heißisostatisch verpresst werden.

Alternativ kann vorgesehen sein, dass der Grundkörper 12 bereits vor der Beaufschlagung der Basisfläche 14 mit Laserstrahlung als aus einem keramischen Pulvermaterial dicht gesinterter Formkörper vorliegt, das heißt es kann vorgesehen sein, dass der Grundkörper 12 zuerst gesintert oder heißisostatisch verpresst wird, bevor die Basisfläche 14 zur Erzielung der aufgerauten Struktur 22 und zur Erzeugung der Markierung 30 mit Laserstrahlung beaufschlagt wird. Der Einsatz des Laserstrahls bei einem offenporösen geschrühten oder grünen Grundkörper hat allerdings den Vorteil, dass durch die anschließende thermische Behandlung, das heißt durch die Sinterung oder das heißisostatische Pressen, thermische Spannungen ausgeglichen werden können, die durch die Laserbestrahlung eingebracht wurden.

## Patentansprüche

1. Verfahren zur Herstellung eines kieferorthopädischen Elements mit einem keramischen Grundkörper, der eine Basisfläche zur Fixierung des Elements an einem Zahn aufweist, **dadurch gekennzeichnet, dass** man einen Laserstrahl in einem Beaufschlagungsbereich an der Basisfläche entlangführt, die Basisfläche im Beaufschlagungsbereich lokal mittels des Laserstrahls oberflächlich erwärmt und durch Rissbildung mikroskopische Partikel aus der Basisfläche herausbrechen.

2. Verfahren nach Anspruch 1, **dadurch gekennzeichnet, dass** sich der Beaufschlagungsbereich nur über einen Teilbereich der Basisfläche erstreckt.

3. Verfahren nach Anspruch 2, **dadurch gekennzeichnet, dass** man die Basisfläche außerhalb des Beaufschlagungsbereichs mit einer Markierung zur Zuordnung des kieferorthopädischen Elements zu einem Zahntyp versieht.

4. Verfahren nach einem der Ansprüche 1 bis 3, **dadurch gekennzeichnet, dass** man den Laserstrahl im Beaufschlagungsbereich schrittweise an der Basisfläche entlangführt.

5. Verfahren nach einem der Ansprüche 1 bis 4, **dadurch gekennzeichnet, dass** man mittels des Laserstrahls die Basisfläche im Beaufschlagungsbereich punktuell erwärmt.

6. Verfahren nach einem der Ansprüche 1 bis 5, **dadurch gekennzeichnet, dass** man im Beaufschlagungsbereich einen fokussierten Laserstrahl punkt- oder linienförmig an der Basisfläche entlangführt.

7. Verfahren nach einem der Ansprüche 1 bis 6, **dadurch gekennzeichnet, dass** man den Laserstrahl im Beaufschlagungsbereich mehrfach mit einander vollständig oder teilweise überdeckenden Einwirkzonen punkt- oder linienförmig an der Basisfläche entlangführt.

8. Verfahren nach einem der Ansprüche 1 bis 7, **dadurch gekennzeichnet, dass** der Fokusdurchmesser des im Beaufschlagungsbereich zum Einsatz kommenden Laserstrahls maximal 0,5 mm beträgt, insbesondere maximal 0,1 mm.

9. Verfahren nach einem der Ansprüche 1 bis 8, **dadurch gekennzeichnet, dass** der im Beaufschlagungsbereich zum Einsatz kommende Laserstrahl eine Energie von maximal 20 W aufweist, insbesondere eine Energie im Bereich von 5 W bis 15 W.

10. Verfahren nach einem der Ansprüche 1 bis 9, **dadurch gekennzeichnet, dass** die Einwirkzeit des im Beaufschlagungsbereich zum Einsatz kommenden Laserstrahls auf eine punktuelle Einwirkzone maximal 0,5 s beträgt, insbesondere maximal 0,1 s.

11. Verfahren nach einem der Ansprüche 1 bis 10, **dadurch gekennzeichnet, dass** der im Beaufschlagungsbereich zum Einsatz kommende Laserstrahl gepulst ist, wobei die Pulsbreite des Laserstrahls maximal 0,1 µs beträgt, insbesondere maximal 50 ns.

12. Verfahren nach einem der Ansprüche 1 bis 11, **dadurch gekennzeichnet, dass** man einen Festkörperlaser zur Bestrahlung der Basisfläche im Beaufschlagungsbereich verwendet, insbesondere einen Neodym-Ytterbium-Vanadat-Laser oder einen Neodym-YAG-Laser.

13. Verfahren nach einem der Ansprüche 1 bis 12, **dadurch gekennzeichnet, dass** man den Grundkörper nach der Laserbeaufschlagung des Beaufschlagungsbereichs der Basisfläche erwärmt.

14. Verfahren nach einem der Ansprüche 1 bis 13, **dadurch gekennzeichnet, dass** der Grundkörper ein aus einem keramischen Pulvermaterial gepresster oder gespritzter Grünling oder ein vorgesinterter Weißling ist, dessen Basisfläche man im Beaufschlagungsbereich mit dem Laserstrahl beaufschlagt, und dass man den Grünling oder Weißling anschließend sintert oder heißisostatisch presst.

15. Verfahren nach einem der Ansprüche 1 bis 14, **dadurch gekennzeichnet, dass** der Grundkörper ein aus einem keramischen Pulvermaterial dichtgesinterter Formkörper ist.

## Claims

1. Method for producing an orthodontic element with a ceramic main body, which has a base surface for fixing the element to a tooth, **characterised in that** a laser beam is guided along the base surface in an impingement area, the base surface in the impingement area is superficially heated locally by means of the laser beam, and microscopic particles break free from the base surface by means of crack development.

2. Method according to claim 1, **characterised in that** the impingement area extends only over a partial area of the base surface.

3. Method according to claim 2, **characterised in that** the base surface outside the impingement area is provided with a marking for allocating the orthodontic element to a tooth type.

4. Method according to any one of claims 1 to 3, **characterised in that** the laser beam is guided in steps along the base surface in the impingement area.

5. Method according to any one of claims 1 to 4, **characterised in that** the base surface is heated at points in the impingement area by means of the laser beam.

6. Method according to any one of claims 1 to 5, **characterised in that** a focussed laser beam is guided along the base surface in a punctiform or linear manner in the impingement area.

7. Method according to any one of claims 1 to 6, **characterised in that**, in the impingement area, the laser beam is repeatedly guided along the base surface in a punctiform or linear manner with exposure zones which completely or partially overlap one another.

8. Method according to any one of claims 1 to 7, **characterised in that** the focus diameter of the laser beam being used in the impingement area is a maximum of 0.5 mm, in particular a maximum of 0.1 mm.

9. Method according to any one of claims 1 to 8, **characterised in that** the laser beam being used in the impingement area has an energy of a maximum of 20 W, in particular an energy in the range from 5 W to 15 W.

10. Method according to any one of claims 1 to 9, **characterised in that** the exposure time of the laser beam being used in the impingement area on a punctiform exposure zone is a maximum of 0.5 s, in particular a maximum of 0.1 s.

11. Method according to any one of claims 1 to 10, **characterised in that** the laser beam being used in the impingement area is pulsed, wherein the pulse width of the laser beam is a maximum of 0.1 µs, in particular a maximum of 50 ns.

12. Method according to any one of claims 1 to 11, **characterised in that** a solid-state laser is used to irradiate the base surface in the impingement area, in particular a neodymium-ytterbium-vanadate laser or a neodymium-YAG laser.

13. Method according to any one of claims 1 to 12, **characterised in that** the main body is heated after the laser impingement of the impingement area of the base surface.

14. Method according to any one of claims 1 to 13, **characterised in that** the main body is a green body pressed or injection-moulded from a ceramic powder material or a presintered white body, the base surface of which is impinged upon in the impingement area by the laser beam, and **in that** the green body or white body is then sintered or is hot isostatically pressed.

15. Method according to any one of claims 1 to 14, **characterised in that** the main body is a shaped body dense sintered from a ceramic powder material.

## Revendications

1. Procédé de réalisation d'un élément d'orthopédie de la mâchoire avec un corps de base en céramique qui présente une surface de base pour la fixation de l'élément à une dent, **caractérisé en ce que** l'on dirige un rayon laser dans une zone d'application le long de la surface de base, on chauffe en surface la surface de base dans la zone d'application localement au moyen du rayon laser et par la formation de fissures, on détache des particules microscopiques de la surface de base.

2. Procédé selon la revendication 1, **caractérisé en ce que** la zone d'application s'étend uniquement sur une zone partielle de la surface de base.

3. Procédé selon la revendication 2, **caractérisé en ce que** l'on dote la surface de base, en dehors de la zone d'application, d'un marquage pour l'affectation de l'élément d'orthopédie de la mâchoire à un type de dent.

4. Procédé selon l'une quelconque des revendications 1 à 3, **caractérisé en ce que** l'on dirige le rayon laser dans la zone d'application pas à pas le long de la surface de base.

5. Procédé selon l'une quelconque des revendications 1 à 4, **caractérisé en ce que** l'on chauffe ponctuellement au moyen du rayon laser la surface de base dans la zone d'application.

6. Procédé selon l'une quelconque des revendications 1 à 5, **caractérisé en ce que** l'on dirige dans la zone d'application, un rayon laser focalisé de façon ponctuelle ou linéaire le long de la surface de base.

7. Procédé selon l'une quelconque des revendications 1 à 6, **caractérisé en ce que** l'on dirige le rayon laser dans la zone d'application de façon ponctuelle ou linéaire plusieurs fois avec des zones d'action se recouvrant complètement ou partiellement les unes les autres le long de la surface de base.

8. Procédé selon l'une quelconque des revendications 1 à 7, **caractérisé en ce que** le diamètre de focalisation du rayon laser utilisé dans la zone d'application est au maximum de 0,5 mm, en particulier au maximum de 0,1 mm.

9. Procédé selon l'une quelconque des revendications 1 à 8, **caractérisé en ce que** le rayon laser utilisé dans la zone d'application présente une énergie au maximum de 20 W, en particulier, une énergie dans la plage de 5 W à 15 W.

10. Procédé selon l'une quelconque des revendications 1 à 9, **caractérisé en ce que** le temps d'action du rayon laser utilisé dans la zone d'application sur une zone d'action ponctuelle est au maximum de 0,5 s, en particulier au maximum de 0,1 s.

11. Procédé selon l'une quelconque des revendications 1 à 10, **caractérisé en ce que** le rayon laser utilisé dans la zone d'application est pulsé, dans lequel la largeur d'impulsion du rayon laser est au maximum de 0,1 µs, en particulier au maximum de 50 ns.

12. Procédé selon l'une quelconque des revendications 1 à 11, **caractérisé en ce que** l'on utilise un laser à solide pour irradier la surface de base dans la zone d'application, en particulier un laser néodyme-ytterbiumvanadium ou un laser YAG dopé au néodyme.

13. Procédé selon l'une quelconque des revendications 1 à 12, **caractérisé en ce que** l'on chauffe le corps de base après l'application laser de la zone d'application de la surface de base.

14. Procédé selon l'une quelconque des revendications 1 à 13, **caractérisé en ce que** le corps de base est une ébauche comprimée ou injectée en un matériau céramique en poudre ou un corps brut préfritté sur la surface de base de laquelle/duquel on applique le rayon laser dans la zone d'application et **en ce que** l'on fritte ensuite ou compresse de façon isostatique à chaud l'ébauche ou le corps brut.

15. Procédé selon l'une quelconque des revendications 1 à 14, **caractérisé en ce que** le corps de base est un corps moulé fritté par compactage en un matériau céramique en poudre.
